(19) Europäisches Patentamt / European Patent Office / Office européen des brevets

(11) **EP 3 477 284 A1**

(12) **EUROPEAN PATENT APPLICATION**
published in accordance with Art. 153(4) EPC

(43) Date of publication:
**01.05.2019 Bulletin 2019/18**

(21) Application number: **17815454.8**

(22) Date of filing: **21.06.2017**

(51) Int Cl.:
*G01N 21/59* (2006.01)   *G01N 15/06* (2006.01)
*G01N 21/05* (2006.01)

(86) International application number:
**PCT/JP2017/022898**

(87) International publication number:
**WO 2017/221986 (28.12.2017 Gazette 2017/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **22.06.2016 JP 2016123153**
**29.09.2016 JP 2016191620**
**26.12.2016 JP 2016251330**

(71) Applicant: **Kyocera Corporation**
**Kyoto-shi, Kyoto 612-8501 (JP)**

(72) Inventors:
• **MASUDA, Yuji**
**Kyoto-shi**
**Kyoto 612-8501 (JP)**
• **NAKAZONO, Jumpei**
**Kyoto-shi**
**Kyoto 612-8501 (JP)**

(74) Representative: **Viering, Jentschura & Partner mbB**
**Patent- und Rechtsanwälte**
**Am Brauhaus 8**
**01099 Dresden (DE)**

(54) **FINE PARTICLE MEASURING INSTRUMENT**

(57)   A fine particle counter of the present disclosure includes a light emitting element and a light receiving element, a mirror capable of reflecting light of the light emitting element to the light receiving element, and a flow path located between the mirror and a part including the light emitting element and the light receiving element.

FIG. 2

## Description

Technical Field

The present invention relates to a fine particle counter.

Background Art

Hitherto, counting fine particles has been demanded. For example, Japanese Patent Application Laid-Open No. 2009-168487 discloses a technology of irradiating a flow path with light to count the number of fine particles passing through the flow path based on intensity of the light transmitting through the flow path.

Summary

A fine particle counter of the present disclosure includes a light emitting element and a light receiving element, a mirror capable of reflecting light of the light emitting element to the light receiving element, and a flow path located between the mirror and a part including the light emitting element and the light receiving element.

Brief Description of Drawings

FIG. 1 illustrates a top view of a fine particle counter of the present disclosure.
FIG. 2 illustrates a cross sectional view of the fine particle counter of the present disclosure.
FIG. 3 illustrates a cross sectional view of the fine particle counter of the present disclosure.
FIG. 4 illustrates a partial enlarged view of the cross section of the fine particle counter illustrated in FIG. 2.
FIG. 5 illustrates a further enlarged partial view of the cross section of the fine particle counter illustrated in FIG. 4.
FIG. 6 illustrates a further enlarged partial view of the cross section of the fine particle counter illustrated in FIG. 4.
FIG. 7 illustrates a partial enlarged top view of the fine particle counter of the present disclosure.
FIG. 8 illustrates a cross sectional view of the fine particle counter according to another embodiment of the present disclosure.
FIG. 9 illustrates a cross sectional view of the fine particle counter according to a different embodiment from FIG. 1.
FIG. 10 illustrates a cross sectional view of the fine particle counter according to a yet different embodiment from FIG. 1.
FIG. 11 illustrates an explanatory diagram of a counting method of the fine particle counter according to the embodiment of FIG. 10.
FIG. 12 illustrates a modification of the fine particle counter of FIG. 1.
FIG. 13 illustrates a modification of the fine particle counter of FIG. 1.

Description of Embodiments

A fine particle counter of the present disclosure is described below with reference to the drawings. In the following description, the orthogonal coordinate system (X, Y, Z) is defined for the sake of convenience, in which the positive side in the Z-axis direction corresponds to the upper side.

(First Embodiment)

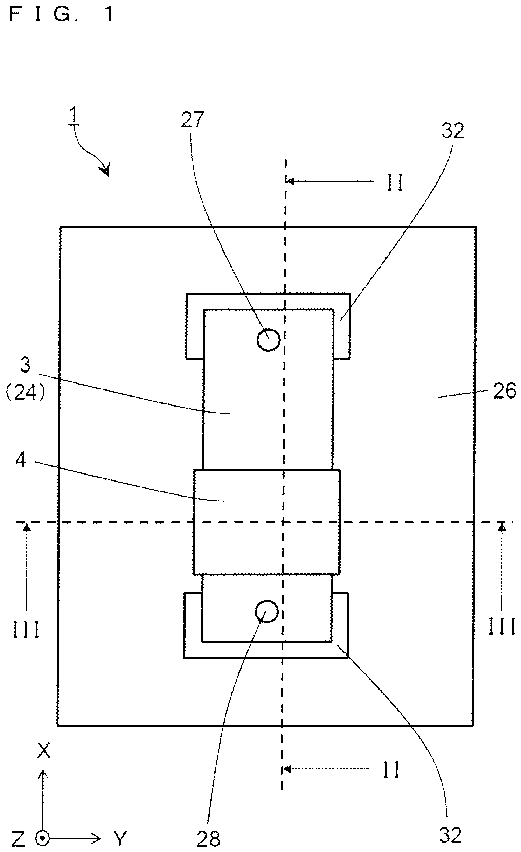

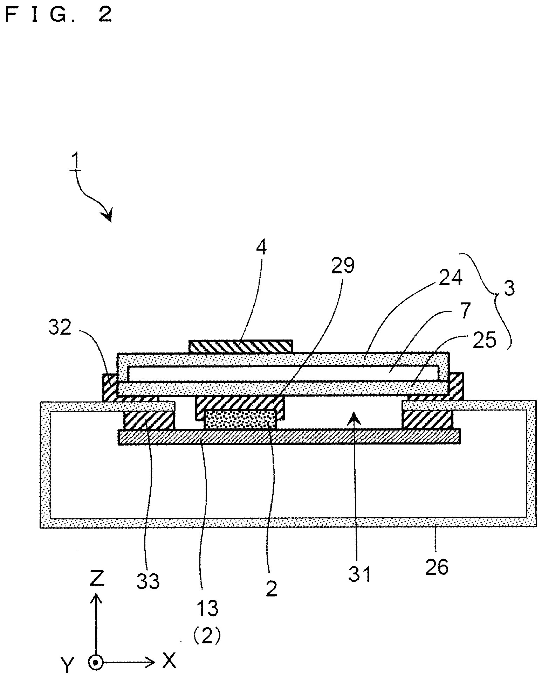

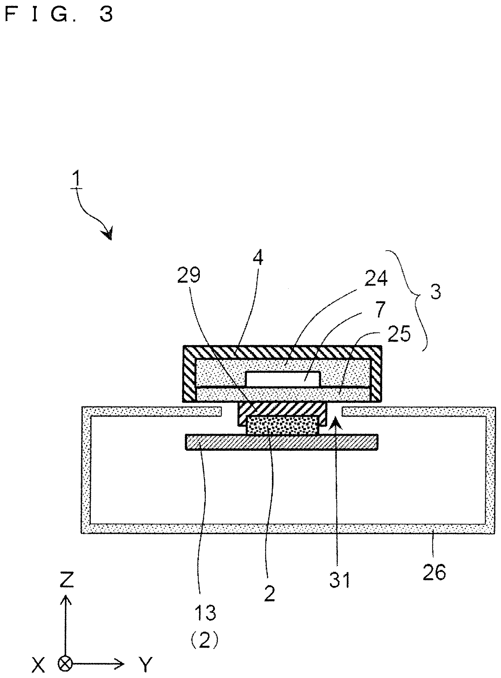

FIG. 1 illustrates one example of a fine particle counter according to a first embodiment of the present invention. Note that FIG. 1 schematically illustrates a fine particle counter. FIG. 2 illustrates a cross sectional view of the fine particle counter illustrated in FIG. 1. FIG. 2 illustrates the fine particle counter of FIG. 1 taken along the line II-II. FIG. 3 illustrates another cross sectional view of the fine particle counter illustrated in FIG. 1. FIG. 3 illustrates the fine particle counter of FIG. 1 taken along the line III-III.

A fine particle counter 1 of the present disclosure includes an optical sensor 2, a flow path member 3, and a mirror 4. The optical sensor 2 includes a light emitting element 5 and a light receiving element 6. The flow path member 3 includes a flow path 7. The flow path 7 is located between the mirror 4 and a part including the light emitting element 5 and the light receiving element 6. Consequently, the fine particle counter 1 can count the number of particles.

Specifically, a sample flows through the flow path 7. Light of the light emitting element 5 passes through the flow path 7, is reflected by the mirror 4 to again pass through the flow path 7, and is then received by the light receiving element 6. At this time, the light passing through the flow path 7 is scattered or absorbed by fine particles in the sample, for example, thus lowering intensity of the light. Consequently, with use of a previously prepared calibration curve representing the relationship between a sample whose number of particles is known and the attenuation amount of light, the fine particles in the sample can be counted by comparing the attenuation amount of light in the fine particle counter 1 to the calibration curve.

Note that the fine particle counter 1 of the present disclosure can count the number of fine particles passing through the flow path 7. Examples of fine particles include cells in body fluids. One specific example may be white blood cells in blood. Fine particles are not limited to the above examples as long as the fine particles can pass through the flow path 7. It is sufficient that fine particles have a correlation between the number of particles and transmittance.

Now, components of the fine particle counter 1 of the present disclosure are described in detail.

The optical sensor 2 mainly includes the light emitting element 5 and the light receiving element 6; the light emitting element 5 emits light, and the light receiving element 6 receives light. When an electric current flows through the light emitting element 5, the light emitting element 5 can emit light. The light emitting element 5 may be, for example, a laser diode (LD), a light emitting diode (LED) or the like. The light receiving element 4 can receive light, and can convert a light signal into an electrical signal. The light receiving element 6 may be, for example, a phototransistor (PT), a photodiode (PD) or the like. Note that the light emitting element 5 of the present disclosure is an LED, and the light receiving element 6 of the present disclosure is a PD. Using an LED as the light emitting element 5 can reduce interference due to light reflected from the mirror 4, for example, as compared to using an LD.

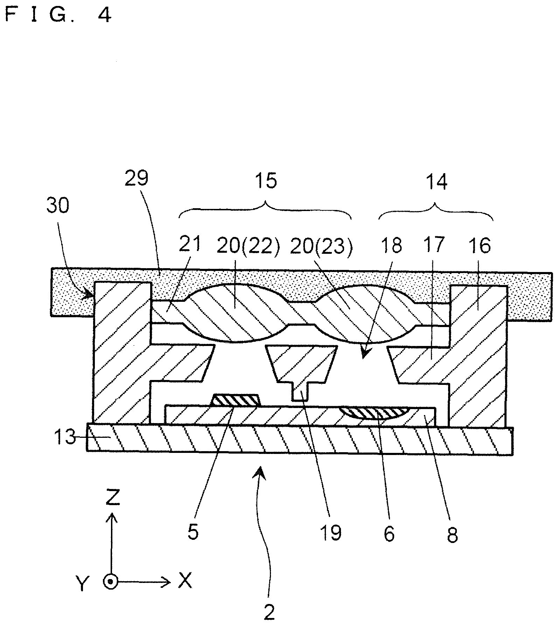

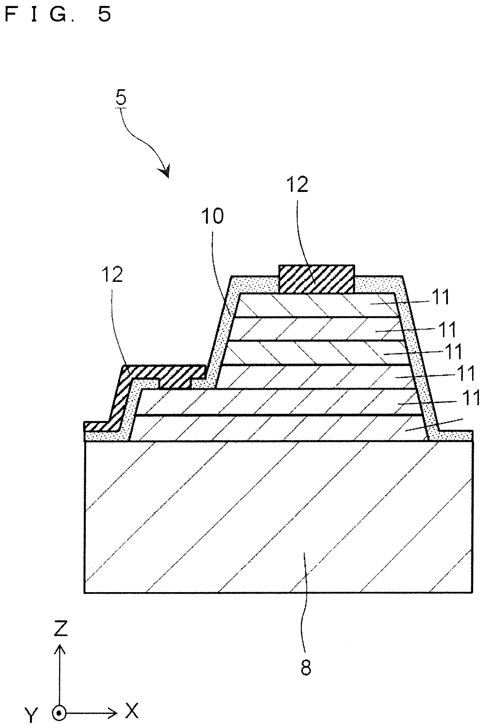

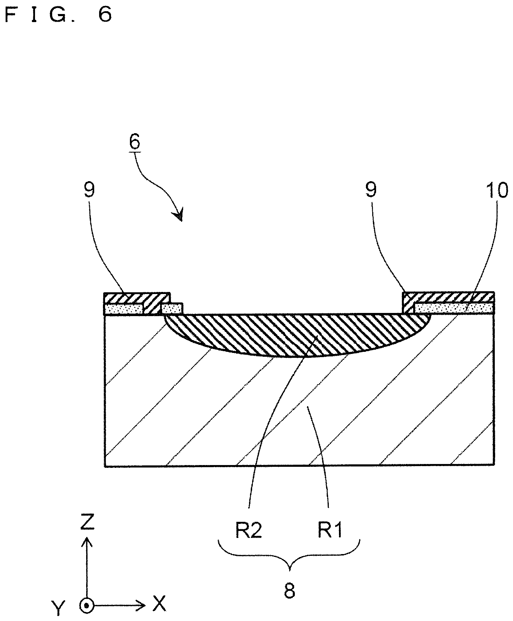

FIG. 4 illustrates an enlarged cross sectional view of the light emitting element 5 and the light receiving element 6. Note that FIG. 4 illustrates an enlarged cross section of the light emitting element 5 and the light receiving element 6 taken from the cross section illustrated in FIG. 2. FIG. 5 illustrates an enlarged cross sectional view of the light emitting element 5. FIG. 5 illustrates a further enlarged cross section of the light emitting element 5 taken from the cross section illustrated in FIG. 4. FIG. 6 illustrates an enlarged cross sectional view of the light receiving element 6. FIG. 6 illustrates a further enlarged cross section of the light receiving element 6 taken from the cross section illustrated in FIG. 4.

The light receiving element 6 of the present disclosure includes a substrate 8, and a pair of first electrodes 9 disposed on a surface of the substrate 8. The substrate 8 of the present disclosure is a plate-like member of a first conductivity type, and partially includes a second region R2 of a second conductivity type. In other words, the substrate 8 includes a region of a first conductivity type (a first region R1), and a region of a second conductivity type (the second region R2) bordering on the first region R1. Consequently, a pn junction can be formed between the first region R1 and the second region R2, and thus light reaching the interface of the pn junction can be converted into an electrical signal. The electrical signal can be extracted through the pair of first electrodes 9.

Note that the "first conductivity type" refers to an "n type," and the "second conductivity type" refers to a "p type" in the present specification. However, in the present invention, the "first conductivity type" is not limited to be an "n type," and the "first conductivity type" may be a "p type." If the "first conductivity type" is a "p type," the "second conductivity type" is an "n type."

Each of the first region R1 and the second region R2 of the present disclosure partially includes a surface of the substrate 8. In other words, a surface of the substrate 8 is the first region R1 or the second region R2. One of the pair of first electrodes 9 of the light receiving element 6 is located on the first region R1, while the other is located on the second region R2.

The first region R1 and the second region R2 of the present disclosure include an upper surface of the substrate 8. The pair of first electrodes 9 is disposed above the upper surface of the substrate 8 with an insulation layer 10 interposed therebetween. The insulation layer 10 is disposed on the upper surface of the substrate 8 in order to route the pair of first electrodes 9. The insulation layer 10 can prevent short circuit faults between the pair of first electrodes 9. The light receiving element 6 of the present disclosure can receive light at the second region R2 of the upper surface of the substrate 8.

A part of the substrate 8 of the present disclosure corresponds to the second region R2, and the entire rest of the substrate 8 corresponds to the first region R1. However, the substrate 8 may have another region not belonging to the first region R1 nor the second region R2 on the condition that the substrate 8 has a pn junction to serve as the light receiving element 6.

The substrate 8 may be made of a semiconductor material, for example. The substrate 8 of the present disclosure may be a silicon (Si) substrate, for example. In forming the substrate 8 of the present disclosure, a Si wafer may be doped with an n-type impurity, and a partial region of the Si wafer may be doped with a p-type impurity. Consequently, the first region R1 and the second region R2 are respectively formed in the substrate 8. Examples of the n-type impurities include phosphorus (P) and nitrogen (N). Examples of the p-type impurities include boron (B) and zinc (Zn). The substrate 8, the first electrodes 9, and the insulation layer 10 may be formed using a publicly known conventional method.

The light emitting element 5 includes a plurality of semiconductor layers 11 disposed on the upper surface of the substrate 8, and a pair of second electrodes 12 disposed on the plurality of semiconductor layers 11. Consequently, when a voltage is applied to the plurality of semiconductor layers 11 via the pair of second electrodes 12, a part of the plurality of semiconductor layers 11 can emit light. The plurality of semiconductor layers 11 and the second electrodes 12 may be formed using a publicly known conventional method.

The optical sensor 2 may further include a wiring board 13. The wiring board 13 is electrically connected to the light emitting element 5, the light receiving element 6, and an external circuit, and can thus supply electricity to the light emitting element 5 and the light receiving element 6. Note that the light emitting element 5 and the light receiving element 6 may be mounted to the wiring board 13 with a bonding wire, for example, with the substrate 8 interposed therebetween.

The wiring board 13 may be formed into a rectangular shape, for example. As the wiring board 13, for example, a resin substrate or a ceramic substrate may be used. The wiring board 13 of the present disclosure is a resin substrate. Note that the resin substrate herein refers to a substrate in which an insulation material in the wiring board 13 is made of a resin material. Similarly, the ceramic substrate refers to a substrate in which an insulation material in the wiring board 13 is made of a ceramics material.

The wiring board 13 may be formed using a publicly known conventional method, such as by alternately stacking an insulation layer and wiring.

The optical sensor 2 further includes a light blocking member 14 and a lens member 15. The light blocking member 14 can block stray light so that the light receiving element 6 does not receive unintended light from the outside, for example. The lens member 15 can guide light from the light emitting element 5 to the flow path 7 (to the mirror 4), and can guide light reflected from the mirror 4 to the light receiving element 6.

Note that the light blocking member 14 and the lens member 15 may be formed using a publicly known conventional method.

Specifically, the light blocking member 14 includes a frame-like wall portion 16 that encloses the light emitting element 5 and the light receiving element 6, and a roof portion 17 provided on an inner surface of the wall portion 16 to cover a region surrounded by the wall portion 16. More specifically, the light emitting element 5 and the light receiving element 6 are accommodated in the region surrounded by an inner surface of the wall portion 16 and a lower surface of the roof portion 17. The light blocking member 14 further includes a plurality of light passages 18, through which light of the light emitting element 5 passes. Note that the light passages 18 of the present disclosure are formed by a plurality of holes.

The light blocking member 14 may further include a light blocking wall 19. The light blocking wall 19 is disposed between the plurality of light passages 18, and extends from the lower surface of the roof portion 17 toward a region between the light emitting element 5 and the light receiving element 6 on the upper surface of the substrate 8. The light blocking wall 19 can reduce the possibility that the light of the light emitting element 3 is directly incident on the light receiving element 6.

The light blocking member 14 may be made of, for example, general-purpose plastic such as polypropylene resin (PP) and polystyrene resin (PS), engineering plastic such as polyamide resin (PA) and polycarbonate resin (PC), super engineering plastic such as a liquid crystal polymer, or a metal material such as aluminum (Al) and titanium (Ti).

Specifically, the lens member 15 includes a lens portion 20 through which light passes, and a support portion 21 that supports the lens portion 20. The lens member 15 of the present disclosure is fitted into a region surrounded by an inner surface of the wall portion 16 and an upper surface of the roof portion 17 of the light blocking member 14 with the aid of the support portion 21.

The lens member 15 may be made of a light transmitting material. The lens member 15 may be made of, for example, plastic including thermosetting resin such as silicone resin, urethane resin and epoxy resin or thermoplastic resin such as polycarbonate resin and acrylic resin, sapphire, inorganic glass or the like.

The lens portion 20 can concentrate and guide light emitted by the light emitting element 3 and light reflected from the tested sample. The lens portion 20 includes a first lens 22 that concentrates light emitted by the light emitting element 3, and a second lens 23 that concentrates light reflected from the tested sample. As each of the first lens 22 and the second lens 23 of the present disclosure, for example, a convex lens, a spherical lens, or an aspherical lens may be used.

The support portion 21 can retain the lens portion 20. The support portion 21 may be formed into a plate-like shape, for example. To retain the lens portion 20, the support portion 21 may be integrally formed with the lens portion 20. Alternatively, to retain the lens portion 20, the first lens 22 and the second lens 23 of the lens portion 20 may be fitted into the support portion 21.

The flow path member 3 can allow a sample (an object to be counted) to flow inside the flow path member 3. The flow path member 3 includes a first substrate member 24 having a groove, and a second substrate member 25 disposed on a surface of the first substrate member 24. The second substrate member 25 closes the opening of the groove of the first substrate member 24. Consequently, the groove of the first substrate member 24 and the surface of the second substrate member 25 form the flow path 7, thereby defining the flow path 7 in the flow path member 3.

The first substrate member 24 may be a flat plate-like member, for example. The first substrate member 24 may be made of a light transmitting material. Examples of the material of the first substrate member 24 include glass, acrylic resin, polycarbonate resin, polydimethylsiloxane (PDMS) resin and the like. The material of the first substrate member 24 of the present disclosure is PDMS. The refractive index of the first substrate member 24 is set to be 1.4 or more and 1.6 or less, for example.

The width of the groove of the first substrate member 24 may be 500 μm or more and 1,500 μm or less, for example. The depth of the groove may be 100 μm or more and 300 μm or less, for example. Note that the first substrate member 24 and the groove of the first substrate member 24 may be formed using a publicly known conventional method. Note that, in the flow path member 3 of the present disclosure, the width and the depth of the groove of the first substrate member 24 are respectively equal to the width and the height of the flow path 7.

The second substrate member 25 may be a planar member, for example. The second substrate member 25 may be made of a light transmitting material. Examples of the material of the second substrate member 25 include glass, acrylic resin, polycarbonate resin, polydimethylsiloxane (PDMS) resin and the like. The refractive index of the second substrate member 25 is set to be 1.4 or more and 1.6 or less, for example. The material of the second substrate member 25 of the present disclosure is glass. Note that the second substrate member 25 may be formed using a publicly known conventional method.

Note that either the first substrate member 24 or the second substrate member 25 may be positioned on the upper side. In the flow path member 3 of the present disclosure, the first substrate member 24 is disposed on an upper surface of the second substrate member 25. Specifically, the second substrate member 25 is disposed on an upper surface of a housing 26 (described later), and the first substrate member 24 is disposed on an upper surface of the second substrate member 25.

The flow path 7 (the groove of the first substrate member 24) has a band-like shape, for example. In other words, the flow path 7 extends in one direction. The flow path 7 includes an inlet 27 for a sample that is located at one end portion, and an outlet 28 for a sample that is located at another end portion. The inlet 27 and the outlet 28 may be respectively formed by a first through hole that is opened at one end portion of the groove of the first substrate member 24, and a second through hole that is opened at another end portion of the groove.

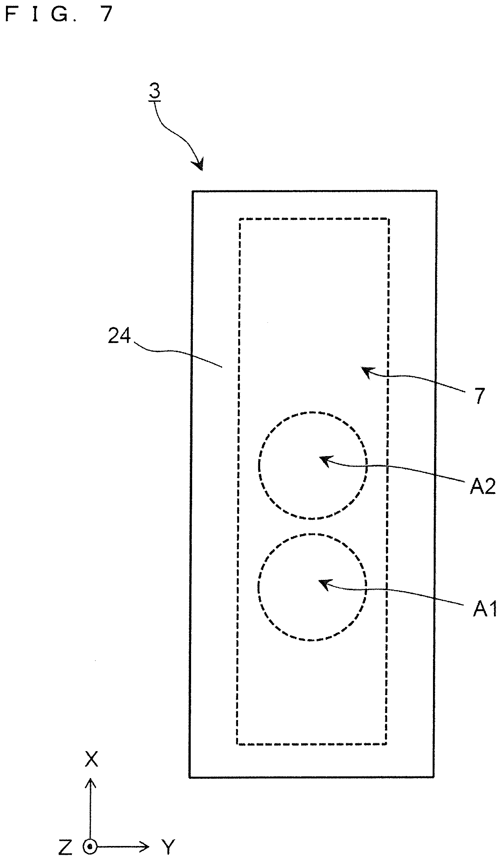

The width of the flow path 7 may be larger than the height of the flow path 7. As illustrated in FIG. 7, a spot diameter of light passing through the flow path 7 may be smaller than the flow path 7. The height of the flow path 7 may be a height allowing one particle to pass through.

Note that FIG. 7 illustrates a top view seeing through the upper surface of the flow path member 3 of the fine particle counter illustrated in FIG. 1.

The light emitting element 5 and the light receiving element 6 may be placed in line along a longitudinal direction of the flow path 7. As illustrated in FIG. 7, a first irradiation region A1 in the flow path 7 that is irradiated by light from the light emitting element 5 and a second irradiation region A2 in the flow path 7 that is irradiated by light reflected from the mirror 4 may be apart from each other. Note that the shape of a part of the flow path 7 overlapped by the first irradiation region A1 may be identical to the shape of a part of the flow path 7 overlapped by the second irradiation region B1.

Each of the thickness of the second substrate member 25 and the thickness of the groove of the first substrate member 24 from a bottom surface may be larger than the wavelength of light of the light emitting element 5. Note that each of the thickness of the second substrate member 25 and the thickness of the groove of the first substrate member 24 from the bottom surface is set to be 0.5 mm or more and 1 mm or less, for example. The wavelength of light of the light emitting element 5 is set to be 400 nm or more and 1,000 nm or less, for example.

The mirror 4 can reflect light of the light emitting element 5 to the light receiving element 6 as described above. The mirror 4 of the present disclosure is disposed on an upper surface of the first substrate member 24. Consequently, light of the light emitting element 5 passes through the second substrate member 25, the flow path 7, and the first substrate member 24. The light is then reflected by the mirror 4 to again pass through the first substrate member 24, the flow path 7, and the second substrate member 25 to be received by the light receiving element 6. Note that the mirror 4 of the present disclosure is located closer to the outlet 28 than to the inlet 27.

The mirror 4 may be a thin film-like member, for example. The material of the mirror 4 may be a material having a refractive index different from the refractive index of the first substrate member 24. The material of the mirror 4 may be made of, for example, a metal material such as aluminum and gold, or a stack of dielectric materials, such as a dielectric multilayer film filter. The refractive index of the mirror 4 is set to be 1.4 or more and 1.6 or less, for example. The mirror 4 may be formed on the upper surface of the first substrate member 24 using methods such as a vapor deposition method and a sputtering method.

The fine particle counter 1 of the present disclosure includes the mirror 4, and therefore light of the light emitting element 5 travels through the flow path 7 twice to be received by the light receiving element 6. Specifically, the traveling distance of light passing through a sample is twice as long as that when a flow path is located between a light emitting element and a light receiving element and light passes simply through a flow path to be received. Accordingly, for example, the fine particle counter 1 of the present disclosure can increase the attenuation amount of light, and can thereby enhance accuracy of counting fine particles.

In the fine particle counter 1, the light emitting element 5, the light receiving element 6, and the mirror 4 may be placed orthogonally to the longitudinal direction of the flow path 7. Consequently, the fine particle counter 1 can be downsized as compared to the case where the light emitting element 5, the light receiving element 6, and the mirror 4 are placed along the longitudinal direction of the flow path 7.

The mirror 4 of the present disclosure is disposed on the upper surface of the flow path member 3 (of the first substrate member 24 in the present disclosure). In other words, the mirror 4 is in contact with a surface of the flow path member 3. Accordingly, unnecessary light reflection can be reduced as compared to the case where an air gap is interposed between the mirror 4 and the flow path member 3.

The mirror 4 may be disposed on a side surface of the flow path member 3 as well as on the upper surface of the flow path member 3. Consequently, unnecessary light can be less liable to enter from the vicinity of the flow path member 3. Accordingly, counting accuracy of the fine particle counter 1 can be enhanced.

The mirror 4 may be disposed on a part of the upper surface of the flow path member 3. Consequently, the flow path 7 can be visibly checked at the portion where the mirror 4 is not placed, making it easy to visibly check whether or not a sample normally flows through the flow path 7.

Alternatively, the mirror 4 may be disposed on the entire upper surface of the flow path member 3. Consequently, stray light can be more effectively made to be less liable to impinge upon the flow path member 3, as compared to the case where the mirror 4 is disposed only on a part thereof.

A part of the first substrate member 24 and the second substrate member 25 of the flow path member 3 may have a light transmitting property, and another part may have a light blocking property. Consequently, light can pass through a part of the first substrate member 24 and the second substrate member 25, while stray light can be less liable to enter from another part.

When the fine particle counter 1 is seen through from the top, the light emitting element 5 and the light receiving element 6 may be located inside an outer edge of the mirror 4. Consequently, stray light entering from the vicinity of the flow path member 3 can be less liable to be received by the light receiving element 6.

Also, when the fine particle counter 1 is seen through from the top, an outer edge of the light blocking wall 19 of the optical sensor 2 may be located inside an outer edge of the mirror 4. Consequently, stray light entering from the vicinity of the flow path member 3 can be less liable to be received by the light receiving element 6.

The fine particle counter 1 may further include an interposing member 29 that is disposed between the flow path member 3 and the optical sensor 2. The interposing member 29 can make stray light entering from the vicinity of the optical sensor 2 less liable to be received by the light receiving element 6. The interposing member 29 may be in contact with the lower surface of the flow path member 3 (the second substrate member 25 in the present disclosure). Consequently, unnecessary reflection of light of the light emitting element 5 due to an interposition of an air gap between the flow path member 3 and the interposing member 29 can be reduced.

Note that the interposing member 29 may have any shape as long as the interposing member 29 can be disposed between the flow path member 3 and the optical sensor 2. The shape of the interposing member 29 of the present disclosure is, for example, a rectangular parallelepiped. The material of the interposing member 29 may be, for example, glass, acrylic resin, polycarbonate or the like. The refractive index of the interposing member 29 may be, for example, 1.4 or more and 1.6 or less.

The interposing member 29 may be in contact with the light blocking member 14 of the optical sensor 2. Consequently, stray light entering from the vicinity of the optical sensor 2 can be less liable to be received by the light receiving element 6.

The interposing member 29 includes a recess 30 on the lower surface. The light blocking member 14 may be disposed in the recess 30. Consequently, stray light entering from the vicinity of the optical sensor 2 can be less liable to be received by the light receiving element 6.

A surface of the light blocking member 14 and an inner surface of the recess 30 may be in contact with each other. Consequently, the interposing member 29 can reduce positional misalignment between the optical sensor 2 and the flow path member 3.

The interposing member 29 may be in contact with the lens member 15 of the optical sensor 2. Consequently, stray light entering from the vicinity of the optical sensor 2 can be less liable to be received by the light receiving element 6.

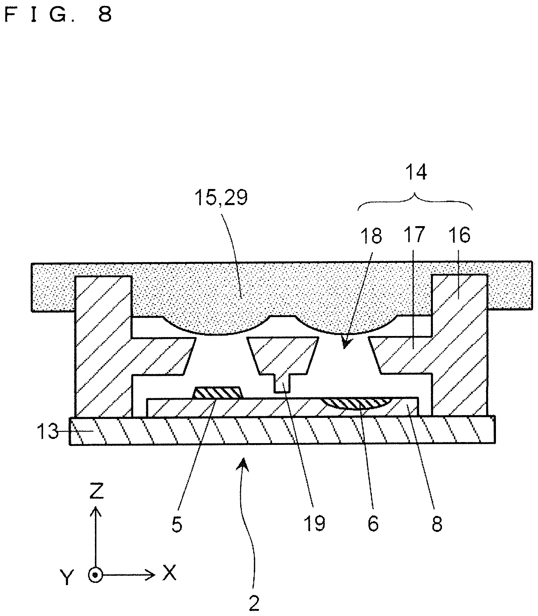

As illustrated in FIG. 8, the interposing member 29 may be integrally formed with the lens member 15 of the optical sensor 2. Specifically, the interposing member 29 and the lens member 15 are made of the same material to form one member. Consequently, stray light entering from the vicinity of the optical sensor 2 can be less liable to be received by the light receiving element 6.

Note that FIG. 8 illustrates a cross sectional view of the fine particle counter 1 according to another embodiment as seen from the same point of view as FIG. 4.

To reduce reflection at the boundary between the interposing member 29 and the flow path member 3, the interposing member 29 may be made of the same material as that of the second substrate member 25 of the flow path member 3. In this case, the interposing member 29 and the second substrate member 25 may be made from one member.

(Second Embodiment)

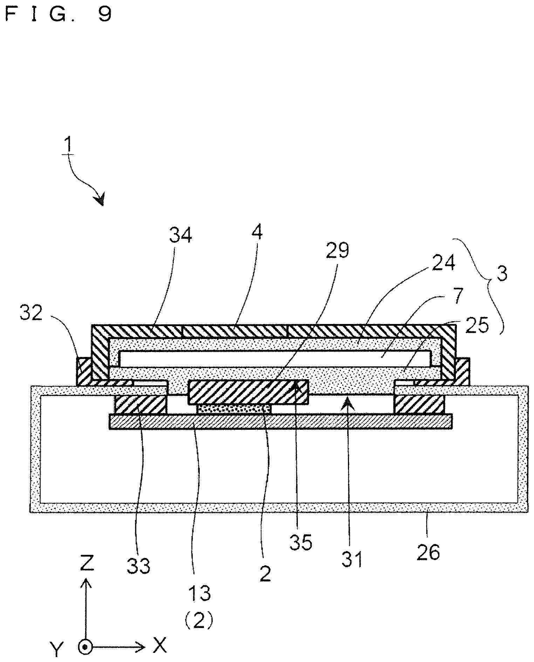

FIG. 9 illustrates the fine particle counter 1 of the present disclosure according to a second embodiment. The fine particle counter 1 according to the second embodiment is described below. Note that description of components similar to those of the first embodiment is omitted.

As illustrated in FIG. 9, the fine particle counter 1 may further include a cover member 34 that covers the upper surface of the flow path member 3. The cover member 34 can make air bubbles less liable to enter the flow path 7 of the flow path member 3.

The cover member 34 may be made of, for example, a metal material such as aluminum (Al) and titanium (Ti), or a resin material such as acrylic resin. If the cover member 34 is made of a metal material, the cover member 34 can enhance its light blocking property. Alternatively, if the cover member 34 is made of a resin material, the flow path 7 can be visibly checked at the portion where the mirror 4 is not placed, making it easy to visibly check whether or not a sample normally flows through the flow path 7.

Note that the cover member 34 may be disposed in a region of the upper surface of the flow path member 3 without the mirror 4, or may cover the upper surface of the mirror 4. The cover member 34 may cover the upper surface of the flow path member 3, and the mirror 4 may be disposed on the cover member 34.

If the cover member 34 is made of a metal material, the cover member 34 may be formed integrally with the mirror 4. Specifically, the cover member 34 and the mirror 4 are made of the same material to form one member. In other words, a part of the cover member 34 may serve as the mirror 4.

The cover member 34 may be formed using a publicly known conventional method, and may be fixed onto the upper surface and the side surface of the flow path member 3 with an adhesive agent, for example. Note that the cover member 34 is punched to form holes, thereby securing the inlet 27 and the outlet 28 of the flow path member 3.

The cover member 34 may have air permeability lower than that of the flow path member 3. In other words, the material of the cover member 34 may be a material having lower air permeability than that of the material of the flow path member 3. Consequently, air can be effectively made to be less liable to enter the flow path member 3.

Conversely, the flow path member 3 has air permeability higher than that of the cover member 34, and therefore has an effect of being capable of absorbing air in the flow path. Note that examples of combinations of the cover member 34 and the flow path member 3 as above may include a combination of the cover member 34 made of a metal material and the flow path member 3 made of a resin material, and a combination of the cover member 34 made of acrylic resin and the flow path member 3 made of polydimethylsiloxane (PDMS) resin.

Note that air permeability of the cover member 34 may be lower than $1,000$ $cm^3/m^2 \cdot 24h \cdot atm$, for example, and air permeability of the flow path member 3 may be $10,000$ $cm^3/m^2 \cdot 24h \cdot atm$ or more and $1,000,000$ $cm^3/m^2 \cdot 24h \cdot atm$ or less, for example. Air permeability can be measured according to JIS K 7126 or the like, for example.

The cover member 34 may further cover the side surface of the flow path member 3. Consequently, air can be even less liable to enter the flow path member 3.

The cover member 34 may be removably mounted to the flow path member 3. Consequently, the cover member 34 can be used repeatedly.

In the flow path member 3, the distance from the flow path 7 to the lower surface may be larger than the distance from the flow path 7 to the upper surface. In the flow path member 3 of the present disclosure, the thickness of the second substrate member 25 may be larger than the thickness from the bottom surface of the groove 7 to the upper surface of the first substrate member 24. Consequently, an air permeation distance is larger on the lower side of the flow path member 3, and thus air can be less liable to enter while light securely enters from the lower surface of the flow path member 3.

The interposing member 29 disposed on the lower surface of the flow path member 3 may extend along the flow path 7. Consequently, the presence of the interposing member 29 can make air less liable to enter the flow path 7.

The lower surface of the flow path member 3 includes a second recess 35. The interposing member 29 may be disposed in the second recess 35. Consequently, air can be less liable to enter the flow path 7.

The fine particle counter 1 may further include a housing 26. The housing 26 can protect the optical sensor 2 and the like. The housing 26 includes a hollow portion inside, and the optical sensor 2 is disposed in the hollow portion of the housing 26. The housing 26 further includes an opening 31 on the upper surface, through which light of the light emitting element 5 passes.

The housing 26 may have any shape as long as the housing 26 can accommodate the optical sensor 2. The housing 26 may be made of a material such as metal and plastic. Note that the hollow portion inside the housing 26 also accommodates other components for activating the optical sensor 2, such as a drive circuit and an arithmetic circuit.

The fine particle counter 1 may further include a positioning member 32 that is disposed on the upper surface of the housing 26. The positioning member 32 can reduce positional misalignment of the flow path member 3. Consequently, the optical sensor 2 and the mirror 4 can be easily positioned.

The positioning member 32 of the present disclosure is in contact with corners of the flow path member 3.

Consequently, positional misalignment of the flow path member 3 can be reduced. Note that the positioning member 32 may have any shape as long as the positioning member 32 can reduce positional misalignment of the flow path member 3. The material of the positioning member 32 may be made of a material such as metal and plastic.

If the cover member 34 is provided as illustrated in FIG. 9, an end portion of the cover member 34 may be located between the side surface of the flow path member 3 and the positioning member 32. Alternatively, the cover member 34 may be fitted into a portion between the flow path member 3 and the positioning member 32. Consequently, the cover member 34 can be fixed.

The fine particle counter 1 may further include a second positioning member 33 on an inner surface of the housing 26 that is opposed to the upper surface of the housing 26. The second positioning member 33 can adjust the distance between the optical sensor 2 and the flow path member 3. Specifically, the second positioning member 33 projects downwardly from an inner surface of a member that forms the upper surface of the housing 26. The second positioning member 33 is in contact with an upper surface of the wiring board 13 of the optical sensor 2. Consequently, the position of the optical sensor 2 and the flow path member 3 can be adjusted. Note that the second positioning member 33 may be made of, for example, a material such as metal and plastic. The second positioning member 33 may be a metal shim or a plastic washer, for example.

(Third Embodiment)

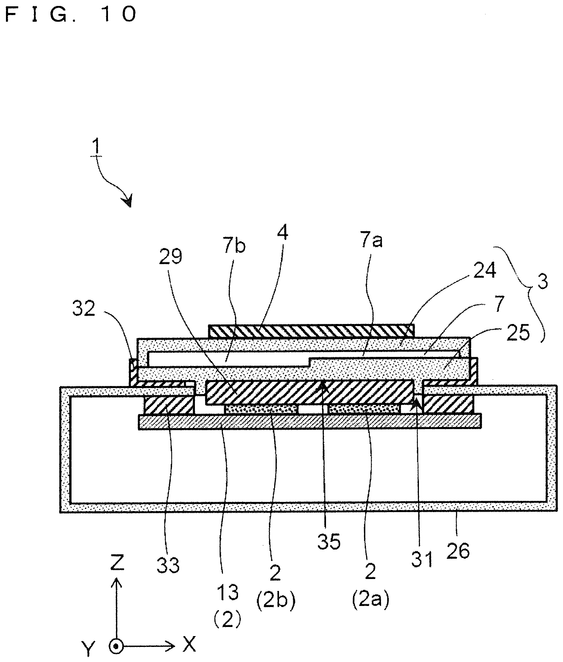

FIG. 10 illustrates the fine particle counter 1 of the present disclosure according to a third embodiment. The fine particle counter 1 according to the third embodiment is described below. Note that description of components similar to those of the first embodiment or the second embodiment is omitted.

As illustrated in FIG. 10, the flow path 7 according to the present embodiment includes a first flow path 7a and a second flow path 7b. The height of the first flow path 7a is smaller than the height of the second flow path 7b. In other words, the height of the second flow path 7b is larger than the height of the first flow path 7a. Consequently, a flow path to be used for counting can be changed depending on light transmittance of a sample. For example, when a sample has high light transmittance, the sample may be counted in the second flow path 7b. Accordingly, the optical path length passing through the sample can be increased to produce large variation in the output, and thus counting accuracy can be enhanced.

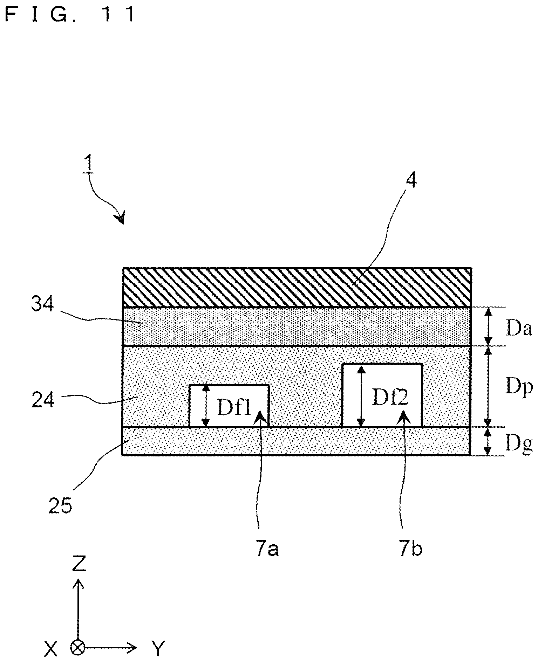

Now, description is given of a method of counting fine particles when the flow path 7 includes the first and second flow paths 7a and 7b. Note that description herein is given based on the conditions presented in FIG. 11. Note that FIG. 11 illustrates an imaginary flow path 7. In FIG. 11, Df1 represents the thickness of the first flow path 7a, Df2 represents the thickness of the second flow path 7b, Da represents the thickness of the cover member 34, Dp represents the thickness of the first substrate member 24, and Dg represents the thickness of the second substrate member 25. In the following mathematical formulas, I0 represents an incident light amount, I1 represents a light reception amount of light passing through the first flow path 7a, I2 represents a light reception amount of light passing through the second flow path 7b, $\alpha$ (an unknown) represents a light absorption coefficient of a sample flowing through the first and second flow paths 7a and 7b, $\beta$ represents a light absorption coefficient of the second substrate member 25, $\gamma$ represents a light absorption coefficient of the first substrate member 24, and $\Delta$ represents a light absorption coefficient of the cover member 34.

In this case, transmittance of the first flow path 7a and transmittance of the second flow path 7b are expressed in (Formula 1).

$$T1 = I1/I0, \; T2 = I2/I0 \qquad \text{(Formula 1)}$$

According to the Beer-Lambert law, transmittance of the first flow path 7a and transmittance of the second flow path 7b are expressed in (Formula 2).

$$T1 = \exp2(-\beta \cdot Dg - \alpha \cdot Df1 - \gamma \cdot (Dp - Df1) - \Delta \cdot Da)$$

$$T2 = \exp2(-\beta \cdot Dg - \alpha \cdot Df2 - \gamma \cdot (Dp - Df2) - \Delta \cdot Da) \qquad \text{(Formula 2)}$$

Rearranging (Formula 1) and (Formula 2) yields (Formula 3).

$$I1/I2 = \exp2(\alpha \cdot (Df2 - Df1) - \gamma \cdot (Df2 - Df1)) \qquad \text{(Formula 3)}$$

Both sides of (Formula 3) are transformed to logarithm, and the formula is then rearranged to define $\alpha$. Thus, (Formula 4) is obtained.

$$\alpha = \ln(I1/I2)/2(Df2 - Df1) + \gamma \qquad \text{(Formula 4)}$$

By comparing $\alpha$ determined in (Formula 4) to a previously determined calibration curve, the number of fine particles can be estimated, for example.

Note that the fine particle counter 1 according to the present embodiment includes a plurality of optical sensors 2. Specifically, the plurality of optical sensors 2 may include a first optical sensor 2a correspondingly to the first flow path 71, and a second optical sensor 2b correspondingly to the second flow path 72. Note that the fine particle counter 1 according to the present embodiment may include one movable optical sensor such that the optical sensor is moved to perform counting in the first flow path 7a and the second flow path 7b.

The first flow path 7a and the second flow path 7b may be connected in series. In the fine particle counter 1 of the present disclosure, the first flow path 7a and the second flow path 7b are connected in series. A sample can effectively flow when the first flow path 7a and the second flow path 7b are connected in series. When the first flow path 7a and the second flow path 7b are connected in parallel, however, a sample is liable to flow through an arbitrary flow path through which the sample can flow more easily.

Note that the present invention is not limited to the above-mentioned embodiments, and various modifications, improvements, etc. can be made without departing from the gist of the present invention.

In the above-mentioned embodiments, the flow path 7 of the present disclosure includes one first substrate member 24 and one second substrate member 25, but the flow path 7 is not limited to the configuration of the present disclosure. For example, a flow path member may include a first substrate member having a hollow portion bored along a flow path, and a pair of second substrate members disposed on upper and lower surfaces of the first substrate member. Specifically, the flow path 7 may be formed by a hollow portion of a first substrate member and surfaces of a pair of second substrate members.

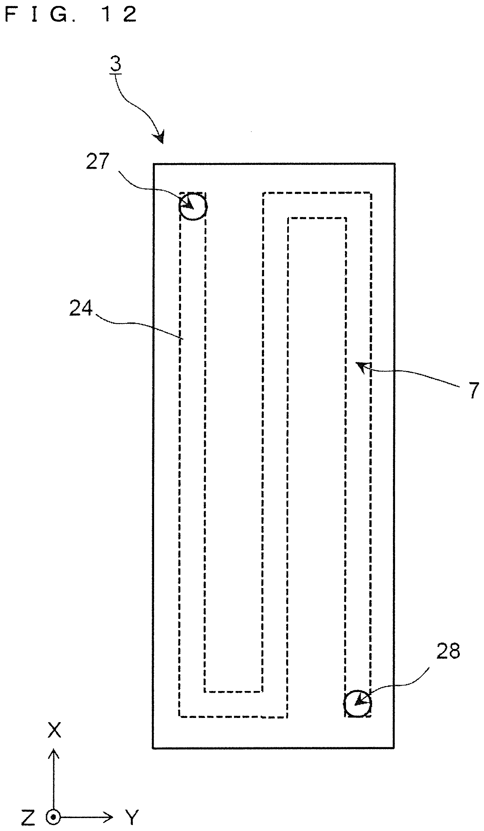

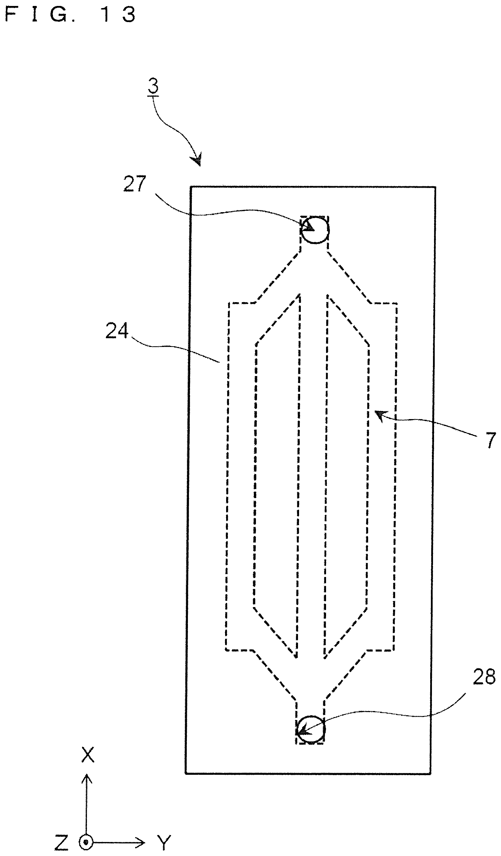

The above-mentioned embodiments exemplify a case where the flow path 7 of the present disclosure is formed into a linear shape, but the flow path 7 may have a meandering pattern as illustrated in FIG. 12, or may be bifurcated as illustrated in FIG. 13.

Explanation of Reference Signs

1 fine particle counter
2 optical sensor
3 flow path member
4 mirror
5 light emitting element
6 light receiving element
7 flow path
8 substrate
9 pair of first electrodes
10 insulation layer
11 plurality of semiconductor layers
12 pair of second electrodes
13 wiring board
14 light blocking member
15 lens member
16 wall portion
17 roof portion
18 light passage
19 light blocking wall
20 lens portion
21 support portion
22 first lens
23 second lens

24 first substrate member
25 second substrate member
26 housing
27 inlet
28 outlet
29 interposing member
30 recess
31 opening
32 positioning member
33 second positioning member
34 cover member
35 second recess
R1 first region
R2 second region
A1 first irradiation region
A2 second irradiation region

**Claims**

1. A fine particle counter comprising:

   a light emitting element and a light receiving element;
   a mirror capable of reflecting light of the light emitting element to the light receiving element; and
   a flow path located between the mirror and a part including the light emitting element and the light receiving element.

2. The fine particle counter according to claim 1, further comprising
   a flow path member comprising the flow path inside, wherein
   the mirror is disposed on an upper surface of the flow path member.

3. The fine particle counter according to claim 2, wherein
   the flow path member has a flat plate-like shape, and
   the mirror partially covers an upper surface and a side surface of the flow path member.

4. The fine particle counter according to any one of claims 1 to 3, wherein
   the flow path extends along one direction, and
   the light emitting element and the light receiving element are placed in line along the one direction.

5. The fine particle counter according to any one of claims 1 to 4, wherein
   a spot diameter of light passing through the flow path is smaller than the flow path.

6. The fine particle counter according to any one of claims 1 to 5, wherein
   when the fine particle counter is seen through in plan view, the light emitting element and the light receiving element
   are located inside an outer edge of the mirror.

7. The fine particle counter according to any one of claims 1 to 6, wherein
   a width of the flow path is larger than a height of the flow path.

8. The fine particle counter according to any one of claims 1 to 7, wherein
   a height of the flow path is a height allowing one particle to pass through.

9. The fine particle counter according to claim 2, wherein
   an interposing member is disposed between the flow path member and a part including the light emitting element
   and the light receiving element.

10. The fine particle counter according to any one of claims 1 to 9, further comprising
    a cover member that covers an upper surface of the flow path member.

**11.** The fine particle counter according to claim 10, wherein
the cover member is integrally formed with the mirror.

**12.** The fine particle counter according to claim 10, wherein
the cover member has air permeability lower than air permeability of the flow path member.

**13.** The fine particle counter according to claim 10, wherein
in the flow path member, a distance from the flow path to a lower surface is larger than a distance from the flow path to an upper surface.

**14.** The fine particle counter according to any one of claims 1 to 13, wherein
the flow path comprises a first flow path, and a second flow path having a height different from a height of the first flow path.

**15.** The fine particle counter according to claim 14, wherein
the first flow path and the second flow path are connected in series.

F I G. 1

FIG. 2

F I G. 3

FIG. 4

F I G. 5

FIG. 6

F I G. 7

FIG. 8

F I G. 9

F I G . 1 0

FIG. 11

FIG. 12

F I G. 1 3

## INTERNATIONAL SEARCH REPORT

| International application No. |
| --- |
| PCT/JP2017/022898 |

**A. CLASSIFICATION OF SUBJECT MATTER**
*G01N21/59*(2006.01)i, *G01N15/06*(2006.01)i, *G01N21/05*(2006.01)i

According to International Patent Classification (IPC) or to both national classification and IPC

**B. FIELDS SEARCHED**

Minimum documentation searched (classification system followed by classification symbols)
G01N21/00-21/61, G01N15/06

Documentation searched other than minimum documentation to the extent that such documents are included in the fields searched
Jitsuyo Shinan Koho          1922-1996   Jitsuyo Shinan Toroku Koho   1996-2017
Kokai Jitsuyo Shinan Koho    1971-2017   Toroku Jitsuyo Shinan Koho   1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | US 2005/0250217 A1  (KEENAN, Rich),<br>10 November 2005 (10.11.2005),<br>paragraphs [0053], [0090] to [0092], [0317] to [0333]; fig. 2, 4, 11 to 12, 17 to 20, 22 to 25<br>& WO 2005/110028 A2 | 1-3<br>4-15 |
| Y | JP 2011-516854 A  (Medical Vision Research & Development AB),<br>26 May 2011 (26.05.2011),<br>paragraphs [0019] to [0023], [0028] to [0029]; fig. 3<br>& CN 101978265 A         & US 2011/0051136 A1<br>paragraphs [0022] to [0026], [0031] to [0033]; fig. 3 | 4-8,10-15 |

☒  Further documents are listed in the continuation of Box C.        ☐    See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 30 August 2017 (30.08.17) | 12 September 2017 (12.09.17) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
| --- | --- |

Form PCT/ISA/210 (second sheet) (January 2015)

## INTERNATIONAL SEARCH REPORT

International application No.

PCT/JP2017/022898

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2010-521676 A  (Advanced Liquid Logic, Inc.), 24 June 2010 (24.06.2010), paragraphs [0005] to [0006], [0032]; fig. 3 & WO 2008/112856 A1     & CN 101652652 A & CA 2717154 A           & US 2010/0118307 A1 paragraphs [0005] to [0006], [0042]; fig. 3 | 6-8,10-15 |
| Y | JP 2015-523577 A  (Theranos, Inc.), 13 August 2015 (13.08.2015), paragraphs [0006], [0014], [0267] to [0272]; fig. 7A & CA 2878957 A           & CN 104769415 A & US 2014/0193892 A1 paragraphs [0007], [0015], [0327] to [0338]; fig. 7A | 9-15 |
| Y | JP 2005-156329 A  (Matsushita Electric Works, Ltd.), 16 June 2005 (16.06.2005), paragraphs [0021] to [0025], [0051] to [0056]; fig. 1, 11 to 14 (Family: none) | 10-15 |

Form PCT/ISA/210 (continuation of second sheet) (January 2015)

## REFERENCES CITED IN THE DESCRIPTION

**Patent documents cited in the description**

- JP 2009168487 A